# EUROPEAN PATENT APPLICATION

(11) **EP 2 755 158 A1**
(43) Date of publication of application: **16.07.2014**
(21) Application number: 13305014.6
(22) Date of filing: 09.01.2013
(51) Int. Cl.: G06F 21/62

(54) **Method and device for privacy-respecting data processing**

(71) Applicant: Thomson Licensing, 92130 Issy-les-Moulineaux (FR)
(72) Inventor: Neumann, Christoph, 35576 Cesson Sévigné (FR); Heen, Olivier, 35576 Cesson Sévigné (FR); Onno, Stéphane, 35576 Cesson Sévigné (FR); Soule, Augustin, 35576 Cesson Sévigné (FR); Chandrashekar, Jaideep, 92443 Issy-les-Moulineaux Cedex (FR)
(74) Representative: Huchet, Anne

(57) **Abstract**

A user device (110) encrypts data and privacy attributes associated with the data. A processing device (140) receives (S202) the encrypted data and privacy attributes, receives (S204) a signed script from a requester and verifies (S208) the signature. If successfully verified, the private key is unsealed (S210) and used to decrypt (S212) the privacy attributes and (S214) script attributes, which are compared (S216) to determine if the script respects the privacy attributes. If so, the encrypted data are decrypted (S218) and the script processes (S220) the private data to generate a result that is encrypted (S222) using a key of the requester and the encrypted result is then output (S224). The device is preferably configured to inhibit the output of any information while the data is unencrypted. This way, the user can be assured that the processing of the private data respects the privacy attributes set by the user.

## Description

### TECHNICAL FIELD

The present invention relates generally to data processing and in particular to privacy-respecting processing.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

There are instances where a user is willing to provide private user data for analysis, in particular aggregation, by a third party, provided that the user can set privacy-respecting limits to the use by the third party. An example of such an instance is the network traffic in a user's home. It could happen that the service provider modifies services to better suit the user's needs upon analysis of the user data. Other examples include recommender systems and medical statistics.

However, the skilled person realizes that security is an important issue. How can the user be assured that the privacy of the data is respected?

An existing solution is homomorphic encryption, but it is often unsuitable for a number of reasons. First, a script may require processing that is not compatible with homomorphic encryption, for instance processing that is not a polynomial over the input data. Second, the input data can be very large in which case homomorphic encryption is slow. Third, the processing sometime uses software from a third party (e.g. from a library) that cannot all be adapted or rewritten for homomorphic encryption.

Another existing solution to this problem is described by Siani Pearson, Marco Casassa Mont and Liqun Chen in End-to-End Policy-Based Encryption and Management of Data in the Cloud; 2011 Third IEEE International Conference on Cloud Computing Technology and Science. Their solution binds encrypted data to 'sticky policies' that specify privacy preferences for the data and relies on a Cloud Service Provider (CSP) that asserts its willingness to fulfill the customized sticky policies. However, there are no further guarantees that the CSP respects the privacy and the CSP has access to both the data in the clear and the symmetric keys used for the encryption.

Yet another existing solution is found in P. Maniatis et al., Do You Know Where Your Data Are? Secure Data Capsules for Deployable Data Protection, In HotOS 2011, 2011. The solution allows users to continuously track and control their data and all derivatives of the data (copied and transformed data) and supports arbitrary untrusted legacy binaries that manipulate data. To this end, the authors introduce the concept of "data capsules", a cryptographically protected container composed of data, an associated policy and the container's history. A host that manipulates data capsules requires a trusted computing base (TCB). The TCB decapsulates data capsules, verifies the associated policy, executes the untrusted binaries, and creates new data capsules as output. During execution of the untrusted binaries the TCB intercepts system calls and implements information flow tracking. In practice, information flow tracking adds prohibitive overhead and may fail against strong attackers (that exploit side channels or the "data-in-the-clear hole," also known as "analog hole"). As pointed out by the authors, it is also difficult to support extensible policy semantics with information flow tracking.

It will thus be appreciated that there is a need for a solution that overcomes at least some of the drawbacks of the prior art solutions. The present invention provides such a system.

### SUMMARY OF INVENTION

In a first aspect, the invention is directed to a method data processing. A device obtains encrypted data to process, privacy attributes associated with the encrypted data, the privacy attributes defining processing requirements a data processing task should respect to be allowed to process the encrypted data or to output a result of data processing of the encrypted data, a script and a signature for the script; verifies the signature; and if the signature is successfully verified: decrypts the encrypted data to obtain decrypted data; processes the decrypted data using the script to obtain a result; and outputs the result. The device also compares the privacy attributes and the processing attributes of the script, the processing attributes defining processing requirements respected by the script to determine if the script respects the privacy attributes.

In a first preferred embodiment, the comparison is performed before the decrypting step if the signature is successfully verified and the decryption is performed upon determination that the script respects the privacy attributes.

In a second preferred embodiment, the comparison is performed after the processing and the outputting is performed upon determination that the script respects the privacy attributes.

In a third preferred embodiment, the private key is sealed within the device and the device unseals the private key upon determination that the script respects the privacy attributes.

In a fourth preferred embodiment, the device deletes at least one of the privacy attributes and the processing attributes after the comparison.

In a fifth preferred embodiment, the script is obtained from a requester and the device encrypts the result using a key of the requester so that the result is output in encrypted form.

In a second aspect, the invention is directed to a device for data processing. The device comprises at least one interface configured to obtain encrypted data to process; obtain privacy attributes associated with the encrypted data, the privacy attributes defining processing requirements a data processing task should respect to be allowed to process the encrypted data or to output a result of data processing of the encrypted data; obtain a script and a signature for the script; and output a result. The device further comprises a processor configured to: verify the signature; if the signature is successfully verified, compare the privacy attributes and processing attributes of the script, the processing attributes defining processing requirements respected by the script to determine if the script respects the privacy attributes; and decrypt the encrypted data to obtain decrypted data; process the decrypted data using the script to obtain the result.

In a first preferred embodiment, the private key is sealed within the device and the processor is further configured, upon determination that the script respects the privacy attributes, to unseal the private key.

In a second preferred embodiment, the processor is further configured to, after comparison of the processing requirements and the processing attributes, delete at least one of the privacy attributes and the processing attributes.

In a third preferred embodiment, the interface is configured to obtain the script from a requester and further to obtain a key of the requester and wherein the processor is further configured to encrypt the result using the key of the requester so that the result is output in encrypted form.

In a fourth preferred embodiment, the device is configured to inhibit output of any information while the data is decrypted.

In a fifth preferred embodiment, the device is implemented using a Trusted Platform Module. It is advantageous that the Trusted Platform Module relies on a Trusted Computing Base launched using late-launch Trusted Platform Module capabilities.

In a sixth preferred embodiment, the processor is further configured to decrypt the encrypted data and to process the decrypted data only upon successful determination that the script respects the privacy attributes.

In a seventh preferred embodiment, the processor is further configured to output the result only upon successful determination that the script respects the privacy attributes.

### BRIEF DESCRIPTION OF DRAWINGS

Preferred features of the present invention will now be described, by way of non-limiting example, with reference to the accompanying drawings, in which
Figure 1 illustrates a system for data processing according to a preferred embodiment of the present invention; and
Figure 2 illustrates a method for processing private data according to a preferred embodiment of the present invention.

### DESCRIPTION OF EMBODIMENTS

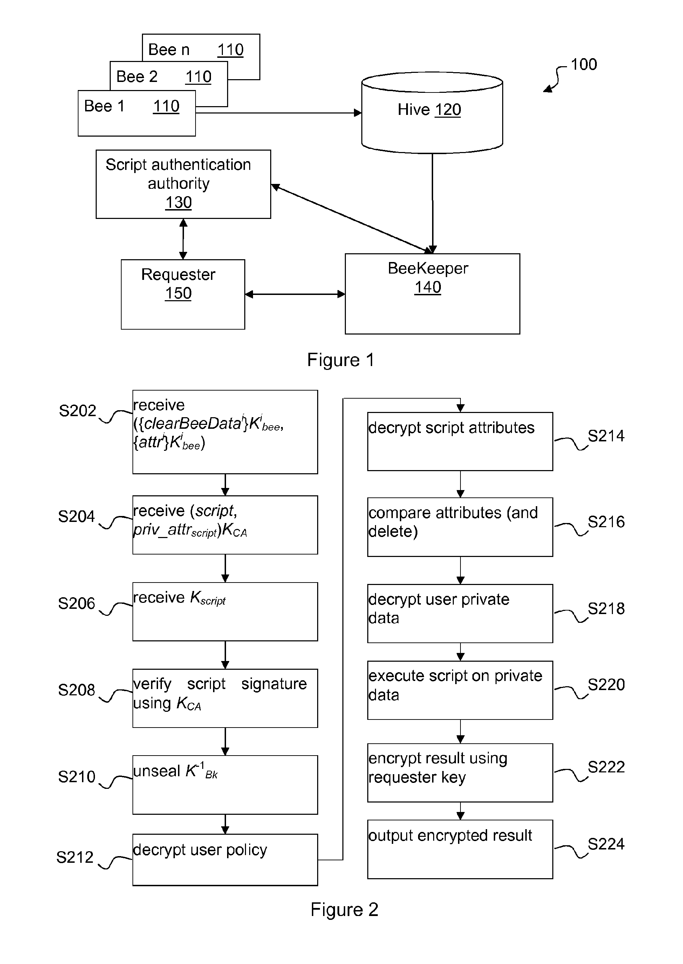

Figure 1 illustrates a system for data processing according to a preferred embodiment of the present invention. The system 100 preferably comprises the following entities:
**Bee:** Each user has an application 110 called a "bee". A bee 110 is advantageously run on the end-user's gateway but may also be run on another network device or on a dedicated box. The bee is configured to collect private data *clearBeeDataⁱ* (*i* is the index of the bee), e.g. information about the network traffic, and to encrypt the collected data using its public key *Kⁱ_{bee}*.

The bee 110 also stores or otherwise has access to a user-defined privacy policy comprising privacy attributes *priv_attrⁱ.* The privacy attributes express, in a predefined format, constraints regarding privacy properties that an analysis script processing the private data should respect. The attributes may for instance restrict the kind of operation that can be executed on private data, or specify the part(s) of data that may be used.

The attributes can be viewed as a collection of keywords and Boolean conditions that the owner of private data can specify in order to restrict the use of the data. The privacy attributes can then be matched to the processing attributes of the script in order to allow or forbid the script to process the data. When the attribute is a condition, the condition can also be matched after the execution of the script: if the condition is satisfied by the output of the script, then the output can be used as a result. Otherwise, at least two cases are possible depending on owner preferences and the expressivity of the condition: rejection and automatic modification of the output until it matches the condition. A known example of automatic modification is the addition of noise until an anonymity condition is met.

A non-limitative list of possible privacy attributes comprises:
- No-payload: The script ignores any payload data; e.g. everything after the IP/UDP, IP/TCP header.
- Aggregate-output-only: The script only outputs global statistics such as means or quantiles, but no plain data from the input data.
- j-combination: The output of the script is at least a combination of j distinct datasets.
- k-combination: The output of the script is a combination of at least k distinct datasets; further attribute data values are suppressed until the values of the set of remaining attributes is identical with the values of at least k-1 other datasets.
- K-anonymous: The output of the script matches one k-anonymity requirement, usually "each release of data must be such that every combination of values of quasi-identifiers can be indistinctly matched to at least k respondents." (from "k-Anonymity" by V. Ciriani et al., page 4, Springer US, Advances in Information Security, 2007). K-anonymity is a stronger property than k-combination.strict-I-obfuscation: any answer to a query must contain at least I records.
- I-obfuscation: any answer to a query contains either I records if the query succeeds and the data contains at least I records, or 0 record otherwise.

The bee 110 is configured to associate the policy with the private data, e.g. by a cryptographic bind: *attrⁱ* = (*priv_attrⁱ*, h(*clearBeeDataⁱ*)), where h is a hash function (or other suitable one-way function). The bound policy *attrⁱ* is preferably stored together with the private data.

The bee 110 is further configured to encrypt the private data *clearBeeDataⁱ* and the bound policy *attrⁱ* using the bee's encryption key *Kⁱ_{bee}*, and to output the encrypted data ({*clearBeeDataⁱ*}*Kⁱ_{bee}*, {*attrⁱ*}*Kⁱ_{bee}*) to a storage device called a 'hive' 120 that advantageously is located in the cloud.

Only the owner of the private key that is associated with the bee's key *Kⁱ_{bee}* may decrypt the encrypted data. In order to allow flexibility in the system, the bee 110 also generates a proxy re-encryption key *Kⁱ_{bee→Bk}.* This key allows re-encryption of the encrypted data so that it instead of being encrypted with the bee's public key *Kⁱ_{bee}* is encrypted with the public key of a so-called bee-keeper 140 without passing via the plaintext. Further details on proxy re-encryption may be found in G. Ateniese et al., Improved Proxy Re-encryption Schemes with Applications to Secure Distributed Storage, ACM Transactions of Information and System Security, 9(1):1-30, Fe. 2006. A suitable proxy re-encryption scheme based on ElGamal encryption is described in "Divertible protocols and atomic proxy cryptography, M. Blaze et al.. Re-encryption can thus be performed by an untrusted third party. In a preferred embodiment, the re-encryption key *Kⁱ_{bee→Bk}* is output to the hive 120.

**Hive**: The hive 120 is an apparatus configured to store encrypted data received from the bees 110, to proxy re-encrypt the encrypted data and to store the re-encrypted data ({*clearBeeDataⁱ*}*K_{Bk}*, {*attrⁱ*}*K_{Bk}*). It will thus be appreciated that the trust requirement for the hive 120 is very low as, in particular, the hive 120 is unable to access unencrypted data during proxy re-encryption. The hive 120 is advantageously implemented using well-known cloud storage and processing.

**Script Certification Authority:** The script certification authority 130 is responsible for assessing data processing tasks ("scripts"), received from requesters 150, that will be executed to process bee private data. The script certification authority 130 verifies if a given script violates or meets its claimed processing attributes. Upon successful verification of a script 135, the script certification authority 130 issues a digital certificate for the script 135 that includes the processing attributes that the script 135 conforms to. More formally the output of the script certification authority 130 is: {*script*, *priv*_*attr_{script}*, *K_{script}*}*K_{CA}*⁻¹, i.e. a signature using the key *K_{CA}*⁻¹ over the data within brackets, where *K_{script}* is the public key of the requester 150 and *K_{CA}*⁻¹ is the private key of the script certification authority 130.

How the script certification authority 130 verifies compliance of the script to its claimed processing attributes is beyond the scope of the present invention. In its simplest form the authority can be composed of a technical committee that manually examines the scripts before affixing a signature. The members of the technical committee need to convene physically as it is possible to use a signature scheme in which each member signs using a partial key. The skilled person will appreciate that the script analysis may also be performed automatic by a script certification authority device 130 executing a suitable prior art script analysis program.

**Beekeeper:** The beekeeper 140 is a device that receives one or more scripts, from a requester 150, for execution on encrypted or re-encrypted data after download thereof from the hive 120. The beekeeper 140 is preferably implemented using a Trusted Platform Module (TPM). The TPM allows secure storage of the beekeepers private key *K*⁻¹*_{Bk}* using sealed storage and set-up of a secure execution environment for the script.

The secure execution environment for the script is preferably obtained by relying on a Trusted Computing Base (TCB), that is launched using so-called late-launch TPM capabilities (e.g. using senter for Intel and skinit for AMD - see Intel® Trusted Execution Technology (Intel® TXT), Software Development Guide Measured Launched Environment Developer's Guide, March 2011, section 1.8, page 12 and AMD Platform for Trustworthy Computing© 2003 Advanced Micro Devices, Inc., page 17, respectively). Late-launch (skinit or senter) resets the value of PCR 17 to 0 and extends it with the measurement (hash) of the TCB: *PCR₁₇ ← H*(0∥*H*(*TCB*)). This measurement, if it is correct, allows the unsealing of the private key of the beekeeper: *Unseal*(*C*) → *K*⁻¹*_{Bk}.* (See Jonathan M. McCune et al.: "Flicker: An Execution Infrastructure for TCB Minimization", section 2.4 for further details.) The key-pair of the beekeeper has been generated and sealed beforehand (e.g. at the setup of the beekeeper).

The TCB is configured to perform at least the following actions in a method for processing private data illustrated in Figure 2:
(i) reception S202of encrypted private data and policies ({*clearBeeDataⁱ*}*Kⁱ_{bee}*, {*attrⁱ*}*Kⁱ_{bee}*);
(ii) reception S204 of a signed script and signed attributes (*script, priv_attr_{script}*)*K_{CA}*;
(iii) reception S206 of the public key of a requester 150 (possibly separate from the script);
(iv) verification S208 of the script signature using the public key of the script certification authority 130. It should be noted that the method stops if the signature is not successfully verified.
(v) unsealing S21 0 of the beekeepers private key *K*⁻¹*_{Bk}*;
(vi) extraction and decryption of the policy, i.e. the privacy attributes, of each bee's private data (step S212) and of the script attributes (step S214), comparison S216 with the privacy attributes of the script, and deletion of the decrypted privacy attributes;
(vii) decryption S218 of a bee's private data only if the script respects the privacy policy bound to the bee's data;
(viii) execution S220 of the script on the decrypted data;
(ix) encryption S222 of the result using the public key *K_{script}* of the requester 150 which is comprised in the script; and
(x) output S224 of the encrypted result.

It is preferred that the TCB does not allow any system interaction while any data is in the clear. System interaction comprises display of data portion to a screen, writing in a resource different from the output file, accessing the network. This way (and through the use of a secure execution environment owing to late-launch), even strong attackers that compromise the operating system that runs the data processing task or attackers that try to replace or update the data processing tasks are unable to access the private data. This can be done by several means including: checking by the certification authority that the script does not allow any system interaction, or using external mechanisms like SECCOMP included in Linux 2.6.23 and later that drastically restricts the system interaction capabilities of a process. Further details on this mechanism may be found in the description of PR_SET_SECCOMP in the man page of the Linux prctl command.

It will be appreciated that it may happen that private data is too large for storage in central memory of the beekeeper, in which case the TCB is configured to obtain a symmetric session key for use to temporarily store session encrypted chunks on an untrusted, external storage. This can be done by encryption /decryption routines in the TCB or by the TPM_Seal and TPM_unseal operations using a storage key.

The following algorithm is an example of pseudo-code for the beekeeper's TCB:

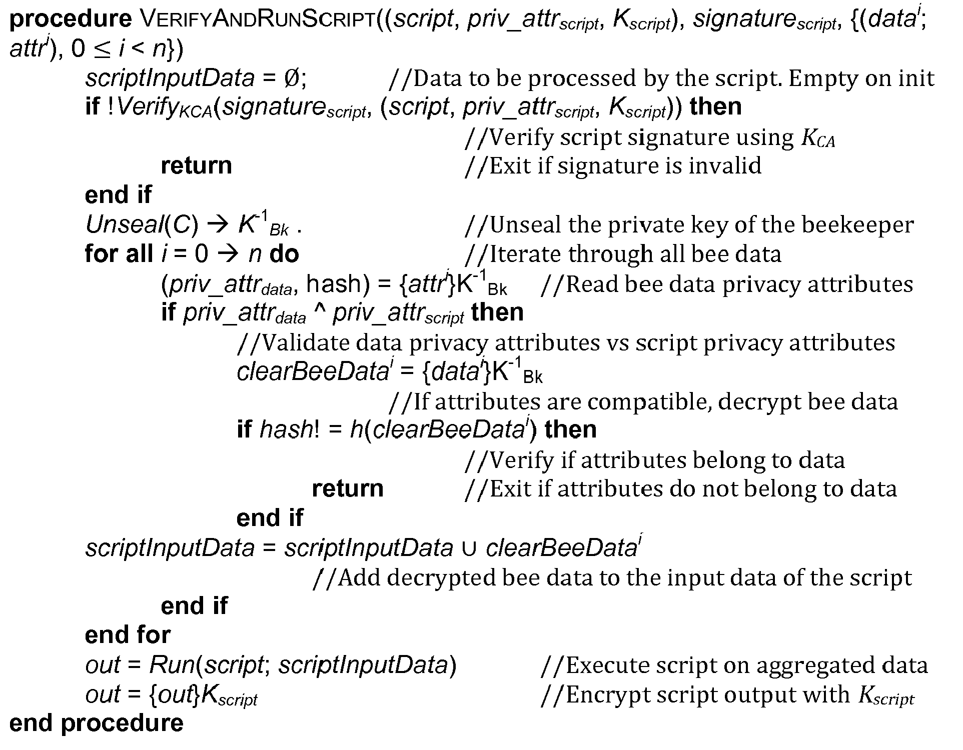

It will be appreciated that, although not illustrated for the sake of clarity, the devices in the system comprise the necessary hardware and software components that are needed for proper functioning, such as for example processors, memory, user interfaces, communication interfaces and operating systems.

It will thus be seen that the present invention proposes keeping the data encrypted except in a trusted environment that has verified and restricted capacities, and processing the data if and only if data privacy attributes and script privacy attributes are compatible.

Through the use of the invention, data owners can be provided guarantees when it comes to the security of the processing, the storage and the network. Processing security means that data is processed only in a way allowed by the owner; this is achieved using the privacy attributes. Storage and network security means that the data is not accessible to any part of the system, except the trusted part that executes the authorized scripts.

The skilled person will appreciate that the present invention can provide a solution that increases the assurance that the privacy policies are respected.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of data processing, the method comprising the steps, in a device (140) comprising a processor, of:
obtaining (S202) encrypted data to process;
obtaining (S202) privacy attributes associated with the encrypted data, the privacy attributes defining processing requirements a data processing task should respect to be allowed to process the encrypted data or to output a result of data processing of the encrypted data;
obtaining (S204) a script and a signature for the script;
verifying (S206) the signature; and
if the signature is successfully verified:
decrypting (S218) the encrypted data to obtain decrypted data;
processing (S220) the decrypted data using the script to obtain a result; and
outputting (S224) the result;
the method further comprising the step of comparing (S216) the privacy attributes and processing attributes of the script, the processing attributes defining processing requirements respected by the script to determine if the script respects the privacy attributes.

2. The method of claim 1, wherein the comparing step is performed before the decrypting step if the signature is successfully verified and the decrypting step is performed upon determination that the script respects the privacy attributes.

3. The method of claim 1, wherein the comparing step is performed after the processing step and the outputting step is performed upon determination that the script respects the privacy attributes.

4. The method of claim 1, wherein the private key is sealed within the device and the method further comprises the step, upon determination that the script respects the privacy attributes, of unsealing (S21 0) the private key.

5. The method of claim 1, further comprising the step, after the comparison step, of deleting (S216) at least one of the privacy attributes and the processing attributes.

6. The method of claim 1, wherein the script is obtained from a requester and the method further comprises the step of encrypting (S222) the result using a key of the requester so that the result is output in encrypted form.

7. A device (140) for data processing comprising:
at least one interface configured to:
obtain encrypted data to process;
obtain privacy attributes associated to the encrypted data, the privacy attributes defining processing requirements a data processing task should respect to be allowed to process the encrypted data or to output a result of data processing of the encrypted data;
obtain a script and a signature for the script; and
output a result; and
a processor configured to:
verify the signature; and
if the signature is successfully verified, compare the privacy attributes and processing attributes of the script, the processing attributes defining processing requirements respected by the script to determine if the script respects the privacy attributes; and
decrypt the encrypted data to obtain decrypted data;
process the decrypted data using the script to obtain the result.

8. The device of claim 7, wherein the private key is sealed within the device and the processor is further configured, upon determination that the script respects the privacy attributes, to unseal the private key.

9. The device of claim 7, wherein the processor is further configured to, after comparison of the processing requirements and the processing attributes, delete at least one of the privacy attributes and the processing attributes.

10. The device of claim 7, wherein interface is configured to obtain the script from a requester and further to obtain a key of the requester and wherein the processor is further configured to encrypt the result using the key of the requester so that the result is output in encrypted form.

11. The device of claim 7, wherein the device (140) is configured to inhibit output of any information while the data is decrypted.

12. The device of claim 7, wherein the device (140) is implemented using a Trusted Platform Module.

13. The device of claim 12, wherein the Trusted Platform Module relies on a Trusted Computing Base launched using late-launch Trusted Platform Module capabilities.

14. The device of claim 7, wherein the processor is further configured to decrypt the encrypted data and to process the decrypted data only upon successful determination that the script respects the privacy attributes.

15. The device of claim 7, wherein the processor is further configured to output the result only upon successful determination that the script respects the privacy attributes.
